# EUROPEAN PATENT SPECIFICATION

(11) **EP 2 712 049 B1**
(45) Date of publication and mention of the grant of the patent: **15.03.2017**
(21) Application number: 13710280.2
(22) Date of filing: 08.01.2013
(51) Int. Cl.: H02J 9/04, H02J 9/06

(54) **TEMPERATURE-CONTROLLED EQUIPMENT AND CABINET FOR COMMUNICATION EQUIPMENT**
SCHRANK FÜR EINE TEMPERATURSTEUERUNGSVORRICHTUNG UND EINE KOMMUNIKATIONSVORRICHTUNG
ÉQUIPEMENT À TEMPÉRATURE RÉGULÉE ET COFFRET POUR UN ÉQUIPEMENT DE COMMUNICATION

(30) Priority: 01.08.2012 CN 201210271409
(43) Date of publication of application: 26.03.2014
(73) Proprietor: Huawei Technologies Co., Ltd., Longgang District Shenzhen, Guangdong 518129 (CN)
(72) Inventor: WANG, Dechen, Shenzhen, Guangdong 518129 (CN); ZENG, Yanqiong, Shenzhen, Guangdong 518129 (CN)
(74) Representative: Gill Jennings & Every LLP
(86) International application number: PCT/CN2013/070230
(87) International publication number: WO 2014/019345

(56) References cited:
- CN-A- 101 277 087
- CN-A- 102 403 776
- CN-A- 102 403 776
- CN-A- 102 820 696
- CN-U- 201 608 690
- CN-U- 201 608 690
- US-A- 4 563 624
- US-A1- 2006 146 461
- US-A1- 2008 164 761
- US-A1- 2009 267 417
- US-B1- 6 297 972

## Description

### TECHNICAL FIELD

The present invention relates to the communication equipment field, and in particular, to a temperature control equipment and a communication equipment cabinet.

### BACKGROUND

A communication equipment cabinet is a cabinet in which a communication equipment is installed. A good cabinet can ensure that the communication equipment runs in a favorable environment. The cabinet systematically solves the issues in communication equipment applications, such as high-density heat dissipation, distribution and management of numerous cables, large-capacity power distribution, and all-around compatibility with different vendors' rack-type equipments, thereby ensuring that the communication equipment runs in a highly stable environment.

Currently, a temperature control equipment is installed in every communication equipment cabinet. The temperature control equipment can adjust the temperature in the communication equipment cabinet, and ensure that the communication equipment works in a proper temperature. Currently, the temperature control equipment is primarily powered by an alternating current. In some regions with harsh environments, the alternating current alone is not enough for meeting the power supply requirement. When the alternating current power supply fails, the reliability of the communication equipment may decrease for lack of a standby power supply.

### SUMMARY

An objective of the present invention is to provide a temperature control equipment, to solve the problem that a conventional temperature control equipment is powered by only an alternating current and is vulnerable to deterioration of working reliability of a communication equipment.

Another objective of the present invention is to provide a communication equipment cabinet comprising a temperature control equipment installed on a cabinet door.

To achieve the foregoing objectives, the present invention provides a temperature control equipment according to claim 1 and a communication equipment cabinet according to claim 3. Further technical features of the present invention are recited in the dependent claims.

In the present invention, the temperature control equipment performs regulated filtering for an alternating current and uses a DC/DC boosting module to boost a direct current, thereby supplying power to the compressor of the temperature control equipment. When the temperature control equipment is powered up by the alternating current power supply and the direct current power supply, the power supply changes from an alternating current to a direct current once the alternating current fails, thereby reducing a fault rate and improving reliability. In addition, the equipment is applicable in wider geographic regions. In regions with steady mains supply, the alternating current power supply is applied directly; in regions with unsteady mains supply, a hybrid power supply formed by generators, solar generators, wind turbine generators, and so on, is transformed into a direct current. The complementary use of the alternating current power supply and the direct current power supply improves efficiency, makes the equipment widely applicable, and improves competitiveness greatly.

### BRIEF DESCRIPTION OF DRAWINGS

FIG. 1 is a circuit module diagram of a temperature control equipment according to an embodiment of the present invention; and
FIG. 2 is a circuit structure diagram of a temperature control equipment according to an embodiment of the present invention.

### DESCRIPTION OF EMBODIMENTS

To make the objectives, technical solutions, and advantages of the present invention more comprehensible, the following further describes the present invention in detail with reference to the accompanying drawings and embodiments. It is understandable that the specific embodiments are only used to explain the present invention and are not intended to limit the present invention.

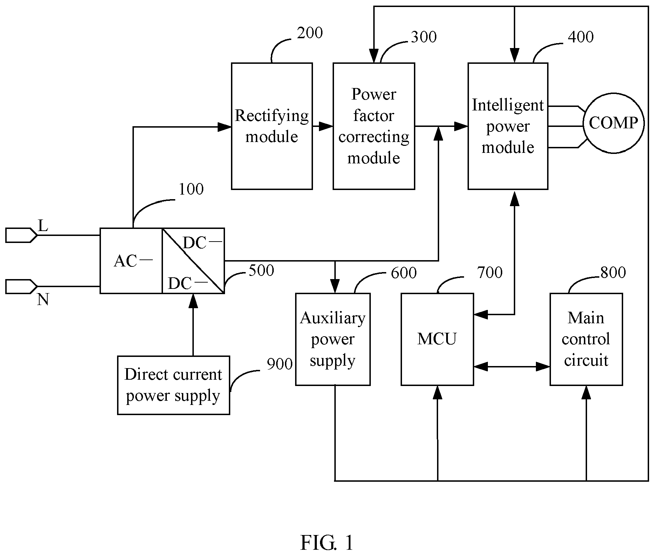

FIG. 1 shows a circuit module structure of a temperature control equipment according to an embodiment of the present invention. For ease of description, only a part related to the embodiment of the present invention is illustrated, and details are given below.

A temperature control equipment includes a compressor COMP, and the temperature control equipment further includes:
an inverter 100, a rectifying module 200, a power factor correcting module 300, and an intelligent power module 400 that are connected in sequence, where the inverter 100 is connected with an alternating current power supply, and the intelligent power module 400 is connected with the compressor COMP.

The inverter 100 includes an inverter bridge, a control logic, and a filter circuit. The inverter is configured to convert direct current energy (including but not limited to a battery and a storage battery) into an alternating current (generally 220v50HZ).

The rectifying module 200 is configured to convert an alternating current into a direct current. In this embodiment, the rectifying module may be formed by diodes, but without being limited to this implementation.

The power factor correcting module 300 is configured to adjust a waveform of a current and compensate for a phase difference between a current and a voltage. A proactive power factor correcting module can achieve a high power factor - generally over 98%. The power factor correcting module is connected with the rectifying module through a smoothing module (optional), and the rectifying module is connected with the inverter.

The main control circuit collaborates with an MCU (Micro Control Unit, also known as single chip microcomputer Single Chip Microcomputer or single-chip microcomputer), and is configured to collect working data information of the compressor, perform analysis and computing according to the collected information, and provide a control signal for the inverter according to a result of the analysis and computing, to control the working voltage and efficiency of the compressor.

The intelligent power module 400 (IPM, Intelligent Power Module) is an advanced power switching device. It has the advantages of a GTR (giant transistor) such as high current density, a low saturated voltage, and high voltage tolerance, and the advantages of a MOSFET (MOS field effect transistor) such as high input impedance, a high switching frequency, and low drive power. Moreover, a logic circuit, a control circuit, a detection circuit, and a protection circuit are integrated inside the intelligent power module 400, and the module can send a detection signal to a CPU. The module is formed by a high-speed low-power-consumption die, an optimized gate drive circuit, and a quick protection circuit, and is easy to use. The module reduces the size of a system, shortens development time, greatly enhances reliability of the system, and caters for the trend of a power device - being modularized, composite, and power integrated circuit (PIC). The module is more and more widespread in a power electronic field.

The temperature control equipment further includes a DC/DC boosting module 500 connected between the direct current power supply 900 and the intelligent power module 400 to boost a direct current and then supply power to the intelligent power module 400.

In an embodiment of the present invention, the temperature control equipment further includes an MCU 700 connected with the intelligent power module 400.

In an embodiment of the present invention, the temperature control equipment further includes a main control circuit 800 connected with the MCU 700.

In an embodiment of the present invention, the temperature control equipment further includes an auxiliary power supply 600 that is connected with the DC/DC boosting module 500, the power factor correcting module 300, the intelligent power module 400, the MCU 700, and the main control circuit 800.

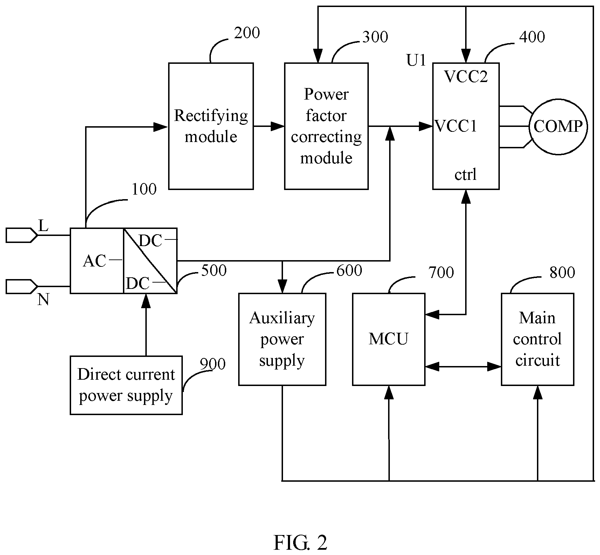

FIG. 2 shows a circuit structure of a temperature control equipment according to an embodiment of the present invention. For ease of description, only a part related to the embodiment of the present invention is illustrated, and details are given below.

In an embodiment of the present invention, the intelligent power module 400 is an intelligent power chip U1. A first power supply terminal VCC1 of the intelligent power chip U1 is connected with the power factor correcting module 300, a second power supply terminal VCC2 of the intelligent power chip U1 is connected with the auxiliary power supply 600, and a control terminal ctrl of the intelligent power chip U1 is connected with the MCU 700.

Further, an embodiment of the present invention provides a communication equipment cabinet, where the communication equipment cabinet includes a temperature control equipment installed on a cabinet door, where the temperature control equipment includes a compressor COMP and further includes:
an inverter 100, a rectifying module 200, a power factor correcting module 300, and an intelligent power module 400 that are connected in sequence, where the inverter 100 is connected with an alternating current power supply, and the intelligent power module 400 is connected with the compressor COMP.

The temperature control equipment further includes a DC/DC boosting module 500 connected between a direct current power supply 900 and the intelligent power module 400 to boost a direct current and then supply power to the intelligent power module 400.

In an embodiment of the present invention, the temperature control equipment further includes an MCU 700 connected with the intelligent power module 400.

In an embodiment of the present invention, the temperature control equipment further includes a main control circuit 800 connected with the MCU 700.

In an embodiment of the present invention, the temperature control equipment further includes an auxiliary power supply 600 that is connected with the DC/DC boosting module 500, the power factor correcting module 300, the intelligent power module 400, the MCU 700, and the main control circuit 800.

In an embodiment of the present invention, the intelligent power module 400 is an intelligent power chip U1. A first power supply terminal VCC1 of the intelligent power chip U1 is connected with the power factor correcting module 300, a second power supply terminal VCC2 of the intelligent power chip U1 is connected with the auxiliary power supply 600, and a control terminal ctrl of the intelligent power chip U1 is connected with the MCU 700.

In the embodiment of the present invention, the temperature control equipment uses an inverter to perform regulated filtering for an alternating current and uses a DC/DC boosting module to boost a direct current, thereby supplying power to the compressor of the temperature control equipment. When the temperature control equipment is powered up by the alternating current power supply and the direct current power supply, the power supply changes from an alternating current to a direct current once the alternating current fails, thereby reducing a fault rate and improving reliability. Besides, the equipment is applicable in wider geographic regions. In regions with steady mains supply, the alternating current power supply is applied directly; in regions with unsteady mains supply, a hybrid power supply formed by generators, solar generators, wind turbine generators, and so on, is transformed into a direct current. The complementary use of the alternating current power supply and the direct current power supply improves efficiency, makes the equipment widely applicable, and improves competitiveness greatly.

The foregoing description is merely exemplary embodiments of the present invention, but is not intended to limit the present invention.

## Claims

1. A temperature control equipment, comprising a compressor,
a rectifying module (200), a power factor correcting module (300), and an intelligent power module (400) comprising a power switching device, wherein an alternating current power supply is connected to an input of the rectifying module (200), an output of the rectifying module (200) is connected to an input of the power factor correcting module (300) and an output of the power factor correcting module (300) is connected to a first power supply input of the intelligent power module (400), wherein an output of the intelligent power module (400) is connected to the compressor; and
a DC/DC boosting module (500), an input thereof being connected to a direct current power supply (900) and an output thereof being connected to the first power supply input of the intelligent power module (400), and configured to boost a direct current and then supply power to the intelligent power module (400);
a micro control unit, MCU (700) connected with the intelligent power module (400),
a main control circuit (800) communicatively connected with the MCU (700), and
an auxiliary power supply (600), an output thereof being respectively connected to a power supply input of the power factor correcting module, a second power supply input of the intelligent power module (400), a power supply input of the MCU(700), and a power supply input of the main control circuit (800) and wherein an input of the auxiliary power supply (600) is connected to the output of the DC/DC boosting module (500);
wherein the main control circuit (800) is configured to control the temperature control equipment such that, in use, the intelligent power module (400) is initially supplied with power from the alternating current power supply via the rectifying module (200) and the power factor correcting module (300); and when the alternating current power supply fails, the intelligent power module (400) is supplied with power from the direct current power supply (900) via the DC/DC boosting module (500).

2. The temperature control equipment according to claim 1, wherein:
the intelligent power module (400) is an intelligent power chip U1, a control terminal ctrl of the intelligent power chip U1 is communicatively connected to the MCU (700).

3. A communication equipment cabinet, wherein the communication equipment cabinet comprises a temperature control equipment installed on a cabinet door, the temperature control equipment comprises a compressor,
a rectifying module (200), a power factor correcting module (300), and an intelligent power module (400) comprising a power switching device, wherein an alternating current power supply is connected to an input of the rectifying module (200), an output of the rectifying module (200) is connected to an input of the power factor correcting module (300) and an output of the power factor correcting module (300) is connected to a first power supply input of the intelligent power module (400), wherein an output of the intelligent power module (400) is connected to the compressor; and
a DC/DC boosting module (500), an input thereof being connected to a direct current power supply (900) and an output thereof being connected to the first power supply input of the intelligent power module (400), and configured to boost a direct current and then supply power to the intelligent power module (400);
a micro control unit, MCU (700) connected with the intelligent power module (400),
a main control circuit (800) communicatively connected with the MCU (700), and
an auxiliary power supply (600), an output thereof being respectively connected to a power supply input of the power factor correcting module, a second power supply input of the intelligent power module (400), a power supply input of the MCU (700), and a power supply input of the main control circuit (800) and wherein an input of the auxiliary power supply (600) is connected to the output of the DC/DC boosting module (500);wherein, the main control circuit (800) is configured to control the temperature control equipment such that, in use, the intelligent power module (400) is initially supplied with power from the alternating current power supply via the rectifying module (200) and the power factor correcting module (300); and when the alternating current power supply fails, the intelligent power module (400) is supplied with power from the direct current power supply (900) via the DC/DC boosting module (500).

4. The communication equipment cabinet according to claim 3, wherein:
the intelligent power module (400) is an intelligent power chip U1, a control terminal ctrl of the intelligent power chip U1 is communicatively connected to the MCU (700).

## Patentansprüche

1. Temperaturregelungsgerät, umfassend einen Kompressor,
ein Gleichrichtungsmodul (200), ein Leistungsfaktorkorrekturmodul (300) und ein
eine Leistungsschalteinrichtung umfassendes intelligentes Leistungsmodul (400),
wobei eine Wechselstromversorgung mit einem Eingang des Gleichrichtungsmoduls (200) verbunden ist, ein Ausgang des Gleichrichtungsmoduls (200) mit einem Eingang des Leistungsfaktorkorrekturmoduls (300) verbunden ist und ein Ausgang des Leistungsfaktorkorrekturmoduls (300) mit einem ersten Stromversorgungseingang des intelligenten Leistungsmoduls (400) verbunden ist,
wobei ein Ausgang des intelligenten Leistungsmoduls (400) mit dem Kompressor verbunden ist; und
ein Gleichstrom-Gleichstrom-Verstärkungsmodul (500), wovon ein Eingang mit einer Gleichstromversorgung (900) verbunden ist und ein Ausgang mit dem ersten Stromversorgungseingang des intelligenten Leistungsmoduls (400) verbunden ist und es dazu konfiguriert ist, einen Gleichstrom zu verstärken und dann das intelligente Leistungsmodul (400) mit Strom zu versorgen;
eine Mikrosteuereinheit MCU (700), die mit dem intelligenten Leistungsmodul (400) verbunden ist,
eine Hauptsteuerschaltung (800), die mit der MCU (700) kommunikativ verbunden ist, und
eine Hilfsstromversorgung (600), wovon ein Ausgang jeweils mit einem Stromversorgungseingang des Leistungsfaktorkorrekturmoduls, einem zweiten Stromversorgungseingang des intelligenten Leistungsmoduls (400), einem Stromversorgungseingang der MCU (700) und einem Stromversorgungseingang der Hauptsteuerschaltung (800) verbunden ist und wobei ein Eingang der Hilfsstromversorgung (600) mit dem Ausgang des Gleichstrom-Gleichstrom-Verstärkungsmoduls (500) verbunden ist;
wobei die Hauptsteuerschaltung (800) dazu konfiguriert ist, das Temperaturregelungsgerät so zu steuern, dass während der Verwendung das intelligente Leistungsmodul (400) zunächst von der Wechselstromversorgung über das Gleichrichtungsmodul (200) und das Leistungsfaktorkorrekturmodul (300) mit Strom versorgt wird; und wenn die Wechselstromversorgung ausfällt, das intelligente Leistungsmodul (400) von der Gleichstromversorgung (900) über das Gleichstrom-Gleichstrom-Verstärkungsmodul (500) mit Strom versorgt wird.

2. Temperaturregelungsgerät nach Anspruch 1, wobei:
das intelligente Leistungsmodul (400) ein intelligenter Leistungschip U1 ist, wobei ein Steueranschluss ctrl des intelligenten Leistungschips U1 kommunikativ mit der MCU (700) verbunden ist.

3. Kommunikationsgeräteschrank, wobei der Kommunikationsgeräteschrank ein an einer Schranktür installiertes Temperaturregelungsgerät umfasst, wobei das Temperaturregelungsgerät einen Kompressor umfasst,
ein Gleichrichtungsmodul (200), ein Leistungsfaktorkorrekturmodul (300) und ein
eine Leistungsschalteinrichtung umfassendes intelligentes Leistungsmodul (400),
wobei eine Wechselstromversorgung mit einem Eingang des Gleichrichtungsmoduls (200) verbunden ist, ein Ausgang des Gleichrichtungsmoduls (200) mit einem Eingang des Leistungsfaktorkorrekturmoduls (300) verbunden ist und ein Ausgang des Leistungsfaktorkorrekturmoduls (300) mit einem ersten Stromversorgungseingang des intelligenten Leistungsmoduls (400) verbunden ist,
wobei ein Ausgang des intelligenten Leistungsmoduls (400) mit dem Kompressor verbunden ist; und
ein Gleichstrom-Gleichstrom-Verstärkungsmodul (500), wovon ein Eingang mit einer Gleichstromversorgung (900) verbunden ist und ein Ausgang mit dem ersten Stromversorgungseingang des intelligenten Leistungsmoduls (400) verbunden ist und es dazu konfiguriert ist, einen Gleichstrom zu verstärken und dann das intelligente Leistungsmodul (400) mit Strom zu versorgen;
eine Mikrosteuereinheit MCU (700), die mit dem intelligenten Leistungsmodul (400) verbunden ist,
eine Hauptsteuerschaltung (800), die mit der MCU (700) kommunikativ verbunden ist, und
eine Hilfsstromversorgung (600), wovon ein Ausgang jeweils mit einem Stromversorgungseingang des Leistungsfaktorkorrekturmoduls, einem zweiten Stromversorgungseingang des intelligenten Leistungsmoduls (400), einem Stromversorgungseingang der MCU (700) und einem Stromversorgungseingang der Hauptsteuerschaltung (800) verbunden ist und wobei ein Eingang der Hilfsstromversorgung (600) mit dem Ausgang des Gleichstrom-Gleichstrom-Verstärkungsmoduls (500) verbunden ist; wobei die Hauptsteuerschaltung (800) dazu konfiguriert ist, das Temperaturregelungsgerät so zu steuern, dass während der Verwendung das intelligente Leistungsmodul (400) zunächst von der Wechselstromversorgung über das Gleichrichtungsmodul (200) und das Leistungsfaktorkorrekturmodul (300) mit Strom versorgt wird;
und wenn die Wechselstromversorgung ausfällt, das intelligente Leistungsmodul (400) von der Gleichstromversorgung (900) über das Gleichstrom-Gleichstrom-Verstärkungsmodul (500) mit Strom versorgt wird.

4. Kommunikationsgeräteschrank nach Anspruch 3, wobei
das intelligente Leistungsmodul (400) ein intelligenter Leistungschip U1 ist, wobei
ein Steueranschluss ctrl des intelligenten Leistungschips U1 kommunikativ mit der MCU (700) verbunden ist.

## Revendications

1. Équipement de contrôle de température, comprenant un compresseur,
un module redresseur (200), un module de correction de facteur de puissance (300), et un module de puissance intelligent (400) comprenant un dispositif de commutation de puissance, dans lequel une alimentation en courant alternatif est connectée à une entrée du module redresseur (200), une sortie du module redresseur (200) est connectée à une entrée du module de correction de facteur de puissance (300) et une sortie du module de correction de facteur de puissance (300) est connectée à une première entrée d'alimentation électrique du module de puissance intelligent (400), dans lequel une sortie du module de puissance intelligent (400) est connectée au compresseur ; et
un module d'appoint DC/DC (500), dont une entrée est connectée à une alimentation en courant continu (900) et dont une sortie est connectée à la première entrée d'alimentation électrique du module de puissance intelligent (400), et configuré pour amplifier un courant continu puis pour alimenter en puissance le module de puissance intelligent (400) ;
une unité de microrégulation, MCU (700), connectée au module de puissance intelligent (400),
un circuit de commande principal (800) connecté de manière communicative à la MCU (700), et
une alimentation électrique auxiliaire (600), dont une sortie est respectivement connectée à une entrée d'alimentation électrique du module de correction de facteur de puissance, à une seconde entrée d'alimentation électrique du module de puissance intelligent (400), à une entrée d'alimentation électrique de la MCU (700), et à une entrée d'alimentation électrique du circuit de commande principal (800), et où une entrée de l'alimentation électrique auxiliaire (600) est connectée à la sortie du module d'appoint DC/DC (500) ;
dans lequel le circuit de commande principal (800) est configuré pour contrôler l'équipement de contrôle de la température de manière à ce que, en utilisation, le module de puissance intelligent (400) soit initialement alimenté par du courant provenant de l'alimentation électrique en courant alternatif via le module redresseur (200) et le module de correction de facteur de puissance (300) ; et, lorsque l'alimentation électrique en courant alternatif échoue, le module de puissance intelligent (400) est alimenté par du courant provenant de l'alimentation en courant continu (900) via le module d'appoint DC/DC (500).

2. Équipement de contrôle de température selon la revendication 1, dans lequel :
le module de puissance intelligent (400) est une puce de puissance intelligente U1, un contrôle du terminal de commande de la puce de puissance intelligente U1 est connecté de manière communicative à la MCU (700).

3. Armoire d'équipement de communication, l'armoire d'équipement de communication comprenant un équipement de contrôle de la température installé sur une porte de l'armoire, l'équipement de contrôle de température comprenant un compresseur,
un module redresseur (200), un module de correction de facteur de puissance (300), et un module de puissance intelligent (400) comprenant un dispositif de commutation de puissance, dans laquelle une alimentation en courant alternatif est connectée à une entrée du module redresseur (200), une sortie du module redresseur (200) est connectée à une entrée du module de correction de facteur de puissance (300) et une sortie du module de correction de facteur de puissance (300) est connectée à une première entrée d'alimentation électrique du module de puissance intelligent (400), dans laquelle une sortie du module de puissance intelligent (400) est connectée au compresseur ; et
un module d'appoint DC/DC (500), dont une entrée est connectée à une alimentation en courant continu (900) et dont une sortie est connectée à la première entrée d'alimentation électrique du module de puissance intelligent (400), et configuré pour amplifier un courant continu puis alimenter en puissance le module de puissance intelligent (400) ;
une unité de microrégulation, MCU (700), connectée au module de puissance intelligent (400),
un circuit de commande principal (800) connecté de manière communicative à la MCU (700), et
une alimentation électrique auxiliaire (600), dont une sortie est respectivement connectée à une entrée d'alimentation électrique du module de correction de facteur de puissance, à une seconde entrée d'alimentation électrique du module de puissance intelligent (400), à une entrée d'alimentation électrique de la MCU (700), et à une entrée d'alimentation électrique du circuit de commande principal (800), et dans laquelle une entrée de l'alimentation électrique auxiliaire (600) est connectée à la sortie du module d'appoint DC/DC (500) ; dans laquelle le circuit de commande principal (800) est configuré pour contrôler l'équipement de contrôle de la température de manière à ce que, en utilisation, le module de puissance intelligent (400) soit initialement alimenté par du courant provenant de l'alimentation électrique en courant alternatif via le module redresseur (200) et le module de correction de facteur de puissance (300) ; et, lorsque l'alimentation électrique en courant alternatif échoue, le module de puissance intelligent (400) est alimenté par du courant provenant de l'alimentation en courant continu (900) via le module d'appoint DC/DC (500).

4. Armoire d'équipement de communication selon la revendication 3, dans laquelle :
le module de puissance intelligent (400) est une puce de puissance intelligente U1, un contrôle du terminal de commande de la puce de puissance intelligente U1 est connecté de manière communicative à la MCU (700).
